# EUROPEAN PATENT APPLICATION

(11) **EP 4 679 396 A2**
(43) Date of publication of application: **14.01.2026**
(21) Application number: 25187404.6
(22) Date of filing: 03.07.2025
(51) Int. Cl.: G08B 29/04, G08B 17/00, G08B 25/14

(54) **MONITORING DETECTION AND NOTIFICATION FOR EVENT SYSTEM FAILURE**

(30) Priority: 12.07.2024 US 202418770946
(71) Applicant: Honeywell International Inc., Charlotte, NC 28202 (US)
(72) Inventor: MALAKAR, Asha Nandan, Charlotte, 28202 (US); NAIR, Manoj T., Charlotte, 28202 (US); TRIPATHI, Sameer, Charlotte, 28202 (US); RAJ, Nishant, Charlotte, 28202 (US)
(74) Representative: Haseltine Lake Kempner LLP

(57) **Abstract**

Devices and systems for monitoring detection and notification for event system failure are described herein. In some examples, one or more embodiments include a computing device comprising a processor and a memory having instructions stored thereon which, when executed by the processor, cause the processor to receive an indication of an event detected by an event system installed in a facility, determine a failure of a device of the event system while the event is occurring, and provide a notification of the failure while the event is occurring.

## Description

### Technical Field

The present disclosure relates to devices, systems, and methods for monitoring detection and notification for event system failure.

### Background

Facilities, such as commercial facilities, office buildings, hospitals, campuses (e.g., including buildings and outdoor spaces), and the like, may have an event system that can be triggered during an event, such as an emergency situation (e.g., a fire). Such an event system can function to warn occupants to evacuate, mitigate against the emergency situation, and/or control elements within a facility during the emergency situation (e.g., doors, elevators, heating, ventilation, and air conditioning (HVAC), smoke control systems, etc.). An event system may include an alarm system having a control panel and a number of event devices (e.g., sensors, sounders, pull stations, etc.) located throughout the facility (e.g., on different floors and/or in different rooms of the facility) that can perform an action when an event (e.g., a hazard event, a fault event, etc.) is occurring in the facility. In an example of an event, the number of event devices may provide a notification of the event to the occupants of the facility via alarms and/or other mechanisms.

### Brief Description of the Drawings

Figure 1 is an example of a system for monitoring detection and notification for event system failure, in accordance with one or more embodiments of the present disclosure.
Figure 2 is a flow chart associated with monitoring detection and notification for event system failure in accordance with one or more embodiments of the present disclosure.
Figure 3 is another flow chart associated with monitoring detection and notification for event system failure in accordance with one or more embodiments of the present disclosure
Figure 4 is an example of a computing device for monitoring detection and notification for event system failure, in accordance with one or more embodiments of the present disclosure.

### Detailed Description

Devices, systems, and methods for monitoring detection and notification for event system failure are described herein. In some examples, one or more embodiments include a computing device comprising a processor and a memory having instructions stored thereon which, when executed by the processor, cause the processor to receive an indication of an event detected by an event system installed in a facility, determine a failure of a device of the event system while the event is occurring, and provide a notification of the failure while the event is occurring.

A facility can utilize an event system in order to warn occupants of the facility of an emergency event, such as a fire. An event system can be a system of devices that operate to collect information about a facility and provide the collected information for analysis. Such an event system can also take actions based on the collected information, such as providing an audible and/or visible warning in an emergency event. For example, the event system can utilize event devices to warn occupants of the emergency event occurring in the space, such as a fire. As used herein, the term "event device" refers to a device that can receive an input relating to an event and/or generate an output relating to an event. Such event devices can be a part of the event system of a space in a facility/in the facility at large and can include devices such as fire sensors, smoke detectors, heat detectors, carbon monoxide (CO) detectors, or combinations of these; air quality sensors; interfaces; manual call points (MCPs); pull stations; input/output modules; aspirating units; and/or audio/visual devices (e.g., speakers, sounders, flashers, buzzers, microphones, cameras, video displays, video screens, etc.), relay output modules, among other types of event devices.

Failures may occur within an event system. Failures may be failures of an event device, failures within a fire panel, and/or failures of the event system network, for instance. Failures can be caused by a malfunctioning device and/or a failure to execute some logic. In some cases, a failure may be deemed a deviation from an expected (or a desired) behavior of one or more devices of an event system during an event.

In previous approaches, failures may be determined using manual checks. This introduces the risk of human error and makes it challenging to promptly identify instances where the expected behavior(s) have not been triggered. For instance, a human may not know what has been configured and/or how to check for its execution. Without automated alerts for system failure of configured logics, there is a heightened risk of delayed emergency response because information regarding the extent of an event, such as a fire, or the failure of safety mechanisms may not reach responders in a timely manner. In scenarios where logic and/or rules fail to execute, occupants and assets may be left vulnerable to the escalating event, compromising safety and increasing the potential for severe damage and/or casualties. Additionally, the lack of automated detection for system failure hinders the system's ability to conduct effective post-event analysis, which limits insights into the root causes of failures and impedes efforts to enhance the system's resilience for future events.

Embodiments of the present disclosure include an internal monitoring system for a panel of an event system (referred to herein as a "fire panel") that bolsters the reliability of the event system. Embodiments herein can operate by continually assessing the activation status of system logic operations. Logic operations include (C&E) systems, multi-dependency logics, delayed operations, and/or scheduled operations, for instance, among others.

Logical operations can be triggered by inputs. Inputs triggering logical operations include events of the system, such as emergency events marked by alarms (e.g., fire alarms, security alarms, technical alarms, auxiliary alarms, pre-alarms, etc.) and/or faults (e.g., faults detected and triggers by the system). Inputs triggering logical operations include output activations. Stated differently, an event raised due to an output being operated can in turn be used as input into logical operation. Output actions (sometimes referred to herein simply as "outputs") include notifications (e.g., sounders, strobes, hooters, speakers, flashers, etc.), protection and extinguishing actions, control actions (e.g., fire door, elevator, HVAC, smoke control, etc.).

According to a given logical operation, a particular input (or set of inputs) is expected to lead to a particular output (or set of outputs). A deviation from this causal relationship is referred to herein as a failure in the performance of an output action, a failure in the activation of one or more system components, or simply a "failure." Failures can be detected. Embodiments herein can identify the impact of the detected failure by evaluating the local operations and the output actions thereon.

C&E rules play a vital role in event alarm systems. C&E rules provide the process of mapping, initiating sensors, and notification appliances to interoperate to identify particular events and provide correspondingly appropriate particular notifications to users of the alarm system, occupants of the facility, system monitoring personnel, emergency personnel, facility ownership, and/or system maintenance personnel based on the particular type of event identified. Activating appropriate audible and/or visual notifications, initiating voice alarm notifications, playing evacuation and/or alert messages on a user's computing device at a right time and/or in the right places are important factors to life safety at a facility.

During an event, if the monitoring system determines a failure, it can trigger the provision of a notification. Such a notification can be an alert flasher provided in a building manager and/or firefighter room of a facility, for instance, and can serve as a clear and immediate visual indicator that alerts personnel to the specific issue. Additionally, a notification can be provided to a mobile device and/or a display of a fire panel to alert personnel who may not be located in the building manager and/or firefighter's room, for instance.

Embodiments herein allow building managers and/or firefighters to receive real-time information about any non-activated components (failures), allowing for swift and targeted intervention. Regular testing of the system, incorporation of redundancy measures, and adherence to industry standards can assist in maintaining its effectiveness. By providing timely and actionable alerts, embodiments of the present disclosure can provide meaningful contribution to the efficacy of the event protection infrastructure. Devices that failed to activate can be re-activated in a timely manner, which may reduce both loss of property and loss of life.

In the following detailed description, reference is made to the accompanying drawings that form a part hereof. The drawings show by way of illustration how one or more embodiments of the disclosure may be practiced.

These embodiments are described in sufficient detail to enable those of ordinary skill in the art to practice one or more embodiments of this disclosure. It is to be understood that other embodiments may be utilized and that process, electrical, and/or structural changes may be made without departing from the scope of the present disclosure.

As will be appreciated, elements shown in the various embodiments herein can be added, exchanged, combined, and/or eliminated so as to provide a number of additional embodiments of the present disclosure. The proportion and the relative scale of the elements provided in the figures are intended to illustrate the embodiments of the present disclosure and should not be taken in a limiting sense.

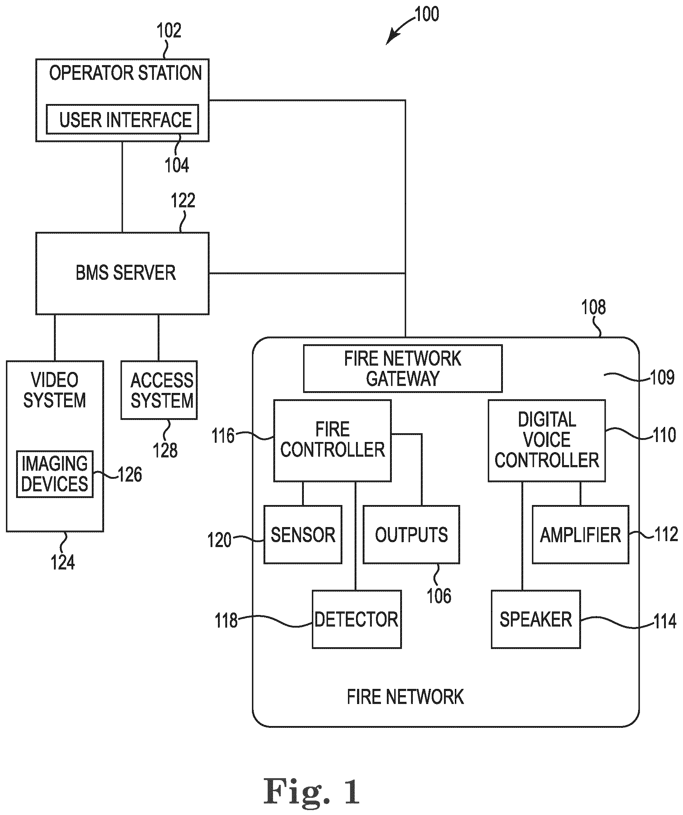

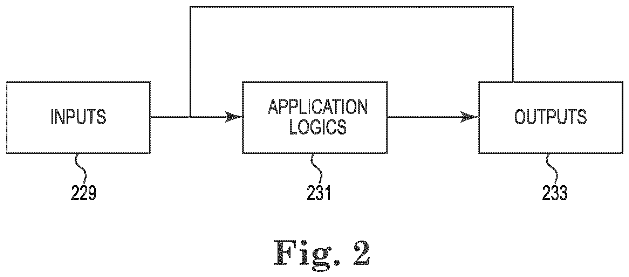

The figures herein follow a numbering convention in which the first digit or digits correspond to the drawing figure number and the remaining digits identify an element or component in the drawing. Similar elements or components between different figures may be identified by the use of similar digits. For example, 102 may reference element "02" in Figure 1, and a similar element may be referenced as 402 in Figure 2.

As used herein, "a", "an", or "a number of" something can refer to one or more such things, while "a plurality of" something can refer to more than one such things. For example, "a number of components" can refer to one or more components, while "a plurality of components" can refer to more than one component.

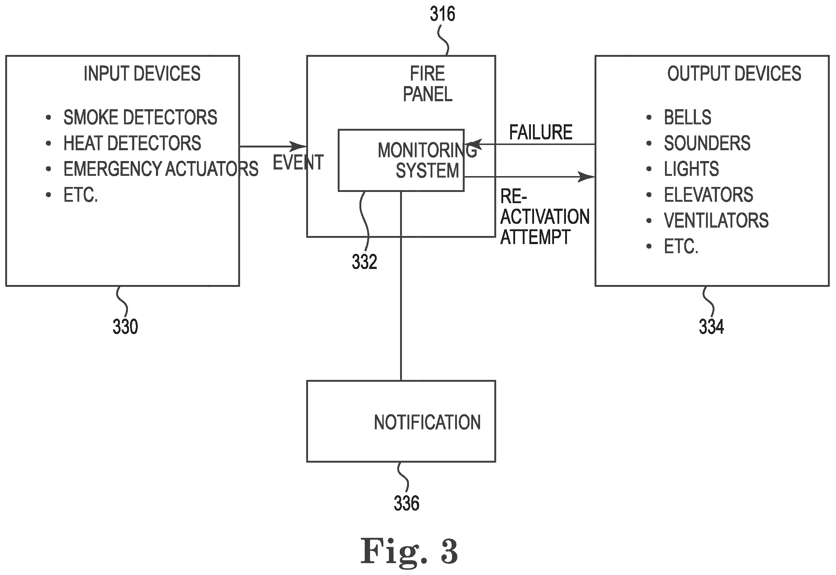

Figure 1 is an example of a system 100 for monitoring detection and notification for event system failure, in accordance with one or more embodiments of the present disclosure. As shown in Figure 1, system 100 can include an operator station 102, outputs 106 (discussed below in connection with Figures 2 and/or 3), a fire network 108, a BMS server 122, a video system 124, and an access system 128. However, systems for in accordance with embodiments of the present disclosure are not limited to the embodiment illustrated in Figure 1 (e.g., various systems can include elements not illustrated in system 100 and/or exclude elements illustrated in system 100).

Operator station 102 can be a computing device (e.g., having a processor and a memory as discussed below in connection with Figure 2). Although one operator station is shown in Figure 1, embodiments of the present disclosure can include multiple operator stations. Various users can access operator station 102 and each user can be authenticated before being allowed access.

Operator station 102 can include a user interface (e.g., display) 104. User interface 104 can be and/or include various display technologies such as, for example, liquid crystal display (LCD), light emitting diode (LED) display, cathode ray tube (CRT) display, etc., and can display videos, data, and/or information to one or more users. Operator station 102 can include additional components such as one or more microphones, for instance, among others (not shown in Figure 1).

As shown in Figure 1, fire network 108 can include a fire network gateway 109, a digital voice controller 110 coupled to a speaker 114 and an amplifier 112, and a fire controller 116 coupled to a detector 118 and a sensor 120. However, fire networks in accordance with embodiments of the present disclosure are not limited to the particular devices illustrated in Figure 1. For example, fire network 108 can include multiple sensors, detectors, speakers and/or amplifiers, among other devices.

Fire network gateway 109 can be a component configured to control a rate at which audio is sent to controllers of fire network 108 (e.g., digital voice controller 110 and/or fire controller 116). For example, fire network gateway 109 can allow maintaining of audio quality and/or prevention of buffer underrun and/or overrun. Digital voice controller 110 can be a device configured to interface with and/or manage various audio devices (e.g., amplifier 112 and/ or speaker 114). Amplifier 112 can be various types of amplifiers, and embodiments of the present disclosure are not limited to particular types of amplifiers. Similarly, speaker 114 can be various types of speakers, and embodiments of the present disclosure are not limited to particular types of speakers. For example, a facility can include a plurality of digital voice controllers, speakers, and/or amplifiers of various types, for instance, dispersed throughout the facility.

Fire controller 116 can be a device configured to interface with and/or manage various fire devices (e.g., detector 118 and/or sensor 120). The fire controller 116 can be a fire control panel. As used herein, the term "control panel" refers to a device at the facility to control components of an alarm system of a facility (e.g., building). For example, the fire controller 116 can be a fire control panel that can receive information from event detection devices and determine whether an emergency event (e.g., a fire) is occurring or has occurred. The fire controller 116 can store C&E rules. In some embodiments, the C&E rules are included in a configuration file stored by the fire controller 116.

As used herein, the term "alarm system event detection device" refers to a device that can send data regarding an event occurring in the device's coverage area (where it can sense an event occurring) and/or receive an input relating to an event. Such alarm system event detection devices can be a part of an alarm system of the facility and can include devices such as fire sensors, smoke detectors, heat detectors, carbon monoxide (CO) detectors, other chemical detector(s), or combinations of these; interfaces; pull stations; input/output modules; aspirating units; and/or audio/visual devices, such as speakers, sounders, buzzers, microphones, cameras, video displays, video screens, and other detector devices, among other types of alarm system devices.

Accordingly, detector 118 can be various types of detectors (e.g., a smoke detector), and embodiments of the present disclosure are not limited to particular types of detectors. Similarly, sensor 120 can be various types of sensors (e.g., a temperature sensor), and embodiments of the present disclosure are not limited to particular types of sensors. For example, a facility can include a plurality of fire controllers, detectors, and/or sensors of various types, for instance, dispersed throughout the facility.

BMS server 122 can include one or more devices (e.g., computing devices, not shown in Figure 1) configured to perform various functions discussed below, for instance. BMS server 122 can interact with and/or manage various systems and/or subsystems of a BMS system (e.g., energy systems, heating, ventilating, and air conditioning (HVAC) systems, etc.) (not illustrated in Figure 1).

In some embodiments, BMS server 122 and/or operator station 102 can be located separately (e.g., remotely, such as in a different geographical location and/or facility) with respect to fire network 108, video system 124, and/or access system 128. Whereas fire network 108, video system 124, and/or access system 128 can be associated with a particular facility, locations associated with BMS server 122 and/or operator station 102 are not so limited. For example, operator station 102 can be located at a first geographical location (e.g., a BMS command center), and fire network 108, video system 124, and/or access system 128 can be located at a second geographical location (e.g., the facility).

Video system 124 can manage a video system associated with a facility. Video system 124 can include a plurality of imaging devices 126 and/or one or more computing devices (not illustrated in Figure 1). Imaging devices 126 can be various types of imaging devices (e.g., video cameras), and embodiments of the present disclosure are not limited to particular types of imaging devices. For example, imaging devices 126 can be dispersed throughout a facility. Each of imaging devices 126 can capture a respective video of a portion of a facility and communicate the captured video to operator station 102, for instance.

Access system 128 can manage access, security, and/or occupancy associated with a facility. Access system 128 can include various sensors, identification card scanners, lighting systems, alarm systems, etc. (not shown in Figure 1). Although shown in Figure 1 as being separate from video system 124 in some embodiments, access system 128 can be integrated and/or correlated with video system 124.

A user can be authenticated and/or gain access to operator station 102 such that the user can visualize user interface 104. User interface 104 can display various interfaces that can be customized by the user, for instance. For example, user interface 104 can display a graphical representation of the facility, fire network 108 and/or a portion of fire network 108. Such a graphical representation can include a floor plan (e.g., two or three-dimensional rendering) of a facility housing fire network 108, for instance, along with locations (e.g., denoted by icons) of various components of fire network 108 (e.g., digital voice controller 110, amplifier 112, and/or speaker 114). Such a graphical representation can include a hierarchical tree view form of the facility model (e.g., derived from existing facility model of the BMS). Such components may be selectable in various manners (e.g., a mouse click).

The graphical representation can include depictions of entities in the facility. In some embodiments, for instance, the locations of people can be depicted using display elements. In some embodiments, a fire, or other cause of an emergency can be depicted graphically with animations.

An event alarm signal can be generated in response to data from one or more alarm system event detection devices (e.g., detector 118 and/or sensor 120) indicating that an event (e.g., fire, emergency situation, etc.) may be occurring. As used herein, the term "event" may refer to any condition occurring within the building, such as a fire, smoke, or chemical sensor activation, an alarm trigger (pull station), or a breach of security.

The fire controller 116 may be configured to transmit information about the emergency event to a computing device and/or a remote network (e.g., a cloud-based network). This information, may include, for example, a unique identifier of the event detection device which detected the event, a date and/or time of the event, a status of the event (e.g., resolved, unresolved), and/or an event type (e.g., smoke detected, communication fault).

Floorplans of each floor of the building may be accessible through the computing device operator station 102. For example, such floorplans may be stored in the memory of the BMS server 1122. These building floorplans may be configured to include specific locations of all of the alarm system event detection devices. These floorplans may be accessed, and portions of the plans may be transferred to the operator station 102 to enable the creation of a visual floor representation as described herein.

Figure 2 is a flow chart associated with monitoring detection and notification for event system failure in accordance with one or more embodiments of the present disclosure. As previously discussed, according to a given logical operation 231, a particular input (or set of inputs) 229 is expected to lead to a particular output (or set of outputs) 233. Inputs 229 are inputs to one or more of the application logics 231 and include inputs received from devices such as from sensors, input modules, and/or communications devices, for instance. Inputs 229 include system events. A system event, as referred to herein, is a type of output 233. For example, a system event can refer to an alarm, a fault, an evacuation, a reset of one or more devices, and/or an activation or deactivation of one or more devices. That is, as shown in Figure 2, some outputs 233 can also be inputs 229.

In the absence of a failure, application logics 231 turn particular input(s) 229 into particular output(s) 233. Application logics include C&E, multi-dependency logics, and/or delays (confirmation delays, verification delays, output action delays, etc.), for instance.

Figure 3 is another flow chart associated with monitoring detection and notification for event system failure in accordance with one or more embodiments of the present disclosure. As illustrated in Figure 3, input devices 330 include devices configured to determine the occurrence of an event. The input devices 330 can communicate the determination of the occurrence of the event to the fire panel 316. In accordance with C&E rules, the fire panel 316 may trigger the operation of one or more output devices 334 to change. This may include, for instance, bells to ring, sounders to sound, lights to activate, elevators to stop and remain open, ventilators to be deactivated, etc.

In some instances, however, there may one or more failures. A failure can be determined by a monitoring system 332. As illustrated in Figure 2, the monitoring system 332 can be executed by the panel 316. In some embodiments, the monitoring system 332 is executed remotely, outside the panel (e.g., in the cloud). A failure can be a failure of an output device to activate (or deactivate) in accordance with the appropriate logic. A failure can be a failure of communications due to faulty wiring or a network error. A failure can be a failure of the panel 316 to execute the appropriate logic. Failures of devices to activate or deactivate can be determined via respective circuitry on the devices. This circuitry can include resistors and/or sensors (e.g., logic activation sensors) configured to determine whether a device is functioning appropriately based on a given input.

Upon determination of the failure, the panel 316 can attempt to reactivate the desired device(s). If the re-activation fails, the monitoring system 332 can provide a notification 336. The notification 336 can be provided in one or more manners. In some embodiments, the notification 336 is provided to the user interface 104, previously described in connection with Figure 1. In some embodiments, the notification 336 is provided to a mobile device. In some embodiments, the notification 336 is provided to dedicated lights in a BMS room and/or at the operator station 102, previously described in connection with Figure 1. In some embodiments, the notification 336 is provided to a user interface on the panel 316. In some embodiments, the notification 336 is provided to personnel within the facility (e.g., using lighting and/or a public address system). The type of notification may depend on the context of the failure. For example, if alarm sounders in a particular zone of a facility have failed, a notification of the failure may be communicated to people within that zone using other available communication devices so that they may evacuate themselves in a timely fashion.

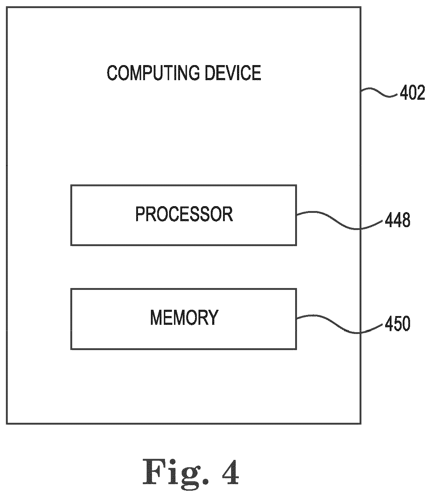

Figure 4 is an example of a computing device 402 for monitoring detection and notification for event system failure, in accordance with one or more embodiments of the present disclosure. As illustrated in Figure 3, the computing device 402 can include a memory 440 and a processor 448, in accordance with the present disclosure.

The memory 440 can be any type of storage medium that can be accessed by the processor 448 to perform various examples of the present disclosure. For example, the memory 440 can be a non-transitory computer readable medium having computer readable instructions (e.g., executable instructions/computer program instructions) stored thereon that are executable by the processor 448 for monitoring detection and notification for event system failure in accordance with the present disclosure.

The memory 440 can be volatile or nonvolatile memory. The memory 440 can also be removable (e.g., portable) memory, or non-removable (e.g., internal) memory. For example, the memory 440 can be random access memory (RAM) (e.g., dynamic random access memory (DRAM) and/or phase change random access memory (PCRAM)), read-only memory (ROM) (e.g., electrically erasable programmable read-only memory (EEPROM) and/or compact-disc read-only memory (CD-ROM)), flash memory, a laser disc, a digital versatile disc (DVD) or other optical storage, and/or a magnetic medium such as magnetic cassettes, tapes, or disks, among other types of memory.

Further, although memory 440 is illustrated as being located within computing device 402, embodiments of the present disclosure are not so limited. For example, memory 440 can also be located internal to another computing resource (e.g., enabling computer readable instructions to be downloaded over the Internet or another wired or wireless connection).

The processor 448 may be a central processing unit (CPU), a semiconductor-based microprocessor, and/or other hardware devices suitable for retrieval and execution of machine-readable instructions stored in the memory 440.

Although specific embodiments have been illustrated and described herein, those of ordinary skill in the art will appreciate that any arrangement calculated to achieve the same techniques can be substituted for the specific embodiments shown. This disclosure is intended to cover any and all adaptations or variations of various embodiments of the disclosure.

It is to be understood that the above description has been made in an illustrative fashion, and not a restrictive one. Combination of the above embodiments, and other embodiments not specifically described herein will be apparent to those of skill in the art upon reviewing the above description.

The scope of the various embodiments of the disclosure includes any other applications in which the above structures and methods are used. Therefore, the scope of various embodiments of the disclosure should be determined with reference to the appended claims, along with the full range of equivalents to which such claims are entitled.

In the foregoing Detailed Description, various features are grouped together in example embodiments illustrated in the figures for the purpose of streamlining the disclosure. This method of disclosure is not to be interpreted as reflecting an intention that the embodiments of the disclosure require more features than are expressly recited in each claim.

Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A computing device (402) for monitoring detection and notification for event system failure, comprising:
a processor (448); and
a memory (450) having instructions stored thereon which, when executed by the processor, cause the processor to:
receive an indication of an event detected by an event system (100) installed in a facility;
determine a failure of a device (116, 120, 106, 118, 112, 114, 110, 330, 334, 316) of the event system while the event is occurring; and
provide a notification (336) of the failure while the event is occurring.

2. The computing device (402) of claim 1, wherein the event is a fire.

3. The computing device (402) of claim 1, wherein the device is a fire panel (116, 316) of the event system, and wherein the failure is associated with application logic (231) of the fire panel.

4. The computing device (402) of claim 1, wherein the device is an event device (120, 106, 118, 112, 114, 110, 330, 334) of the event system.

5. The computing device (402) of claim 1, wherein the instructions to provide the notification include instructions to provide the notification to an alert display (104) associated with a manager of the facility.

6. The computing device (402) of claim 1, wherein the instructions to provide the notification include instructions to provide the notification to a mobile device.

7. The computing device (402) of claim 1, wherein the instructions to provide the notification include instructions to provide the notification to a display of a fire panel of the facility.

8. The computing device (402) of claim 1, wherein the indication of the event is determined and provided by an event device.

9. The computing device (402) of claim 1, wherein the indication of the event is a system event previously output by application logic.

10. A system, comprising:
a plurality of event devices (120, 106, 118, 112, 114, 110, 330, 334) of an event system (100) in a facility;
a computing device (402) configured to:
receive an indication of an event detected by the event system;
determine a failure of a portion of the event system while the event is occurring; and
provide a notification (336) of the failure while the event is occurring.

11. The system of claim 10, wherein each of the plurality of event devices includes an activation sensor.

12. The system of claim 11, wherein the computing device is configured to determine the failure of the portion of the event system responsive to a determination, made by an activation sensor of the event device, that the event device failed to activate during the event.

13. The system of claim 10, wherein the computing device is configured to assess a respective activation status of a plurality of logic components of the event system.

14. The system of claim 13, wherein the computing device is configured to compare the activation statuses with expected activation statuses based on cause and effect rules of the event system.

15. The system of claim 10, wherein the plurality of event devices include:
a fire panel (116, 316);
smoke detectors (118);
heat detectors (118);
emergency actuators;
access control devices (128); and
ventilators.
